# EUROPÄISCHE PATENTSCHRIFT

(11) **EP 3 170 186 B1**
(45) Veröffentlichungstag und Bekanntmachung des Hinweises auf die Patenterteilung: **12.09.2018**
(21) Anmeldenummer: 15739538.5
(22) Anmeldetag: 10.07.2015
(51) Int. Cl.: G21D 1/00, G21F 9/28, G21F 9/34, E04G 23/08

(54) **VERFAHREN ZUR ÜBERWACHUNG VON RELEVANTEN ABFÄLLEN, DIE BEIM RÜCKBAU EINER STRAHLENBELASTETEN ANLAGE ODER TEILEN DAVON ANFALLEN**
METHOD FOR MONITORING RELEVANT WASTES PRODUCED DURING THE DEMOLITION OF A RADIATION-LOADED PLANT OR PARTS THEREOF
PROCÉDÉ DE SURVEILLANCE DE DÉCHETS SENSIBLES PRODUITS LORS DU DÉMANTÈLEMENT D'UNE INSTALLATION EXPOSÉE À DES RADIATIONS OU D'ÉLÉMENTS DE LADITE INSTALLATION

(30) Priorität: 17.07.2014 DE 102014110024
(43) Veröffentlichungstag der Anmeldung: 24.05.2017
(73) Patentinhaber: Veltec GmbH & Co. KG, 67346 Speyer (DE)
(72) Erfinder: TANKO, Andreas, 76356 Weingarten (DE)
(74) Vertreter: Lenzing Gerber Stute
(86) Internationale Anmeldenummer: PCT/EP2015/065837
(87) Internationale Veröffentlichungsnummer: WO 2016/008818

(56) Entgegenhaltungen:
- EP-A1- 1 638 035
- JP-A- 2001 141 887
- JP-A- 2009 210 403
- KR-A- 20090 011 123

## Beschreibung

Die vorliegende Erfindung betrifft ein Verfahren zur Überwachung von relevanten Abfällen, die beim Rückbau einer strahlenbelasteten Anlage oder Teilen davon anfallen.

Unter strahlenbelasteter Anlage oder Teilen davon werden im Sinne der Erfindung kerntechnische Anlagen, wie z.B. Kernkraftwerke oder kerntechnische Versuchsanlagen, sowie allgemein Anlagen und deren Teile verstanden, die energiereichen ionisierenden und/oder radioaktiven Strahlen wie z.B. Alpha, Beta oder Gamma Strahlen ausgesetzt waren und/oder selbst noch derartige Strahlen aussenden.

Im Sinne der Erfindung werden als Teile der Anlagen u.a. in, an oder neben der Anlage installierte Maschinen, Einrichtungsgegenstände, Rohre, Leitungen, elektrische Leitungen, Betriebsflüssigkeiten und Gase verstanden.

Relevante Abfälle im Sinne dieser Erfindung sind ganze oder zerlegte Teile der Anlagen, wie z.B. Vorrichtungen, Einrichtungsgegenstände, Rohre, Leitungen und Maschinen, sowie Teile von zerlegten Vorrichtungen, Einrichtungsgegenständen, Rohren, Leitungen und Maschinen sowie Gase, Feststoffe und Flüssigkeiten. Abfall kann somit u.a. ein Teil eines Kessels, Rohres, einer Mauer oder einer Maschine sein. Sofern auf dem jeweiligen Abfall selbst kein Daten-Chip, insbesondere in Form eines RFID-Chips, anbringbar ist, so ist der jeweilige Abfall in ein Behältnis oder eine ihn umhüllende Verpackung einzubringen, auf dem der Daten-Chip anbringbar ist. Relevante Abfälle können nach der Dekontamination oder nach Freimessung zur radiologischen Unbedenklichkeit auch einer schadlosen Wiederverwertung zugeführt werden.

Normale Abfälle im Sinne der Erfindung sind all die übrigen Abfälle, die aufgrund von gesetzlichen oder behördlichen Bestimmungen nicht überwacht werden müssen. Somit können nicht strahlenbelastete Abfälle anders als relevante Abfälle behandelt werden.

In der Vergangenheit wurden bereits zahlreiche strahlenbelastete Anlagen rückgebaut. Die dabei entstandenen Abfälle, insbesondere noch strahlenden Abfälle, wurden in Behältnisse getan, wobei die Behältnisse eine Identifikationsnummer erhielten. Die Identifikationsnummer sowie Informationen über den im Behältnis befindlichen Abfall wurden auf Papier notiert, welches in Ordnern archiviert wurde. Evtl. wird eine Information am Behältnis in Papierform angebracht, welche jedoch aufgrund der widrigen äußeren Umstände relativ schnell nicht mehr lesbar ist bzw. verloren gehen kann, so dass keine Informationen mehr an Ort und Stelle über das Behältnis und seinen Inhalt zu erhalten sind. Auch wurden die Daten bzgl. Art des Behältnisses, dessen Inhalt, etc. bereits in Datenverarbeitungsgeräten archiviert, stehen jedoch für eine Recherche, insbesondere eine online Recherche in der Regel zur Verfügung.

Das vorbeschriebene Vorgehen hat zudem weitere zahlreiche Nachteile. So ist es nicht möglich, die Bewegung des Behältnisses bzw. des Abfalls nachzuverfolgen. Auch ist nicht online abrufbar, an welchem Ort sich gerade das Behältnis befindet und welche Strahlung der Abfall aussendet und mit welcher Intensität die Strahlung vom Abfall noch ausgesendet wird. Auch kann der entstandene Abfall nicht effektiv bis zu seinem letzten Lagerort weiterverarbeitet und transportiert werden. Sofern man Informationen über die von einem Behältnis ausgesendete Strahlung und deren Intensität wissen möchte, so ist man heute drauf angewiesen dies mittels eines Messgerätes vor Ort am Behältnis zu ermitteln.

Dokument JP 2001 141887 A offenbart ein Verfahren zum Rückbau einer kerntechnischen Anlage, bei dem die Radioaktivität und der Aufenthaltsort von Abfällen mit Hilfe von Daten-Chips überwacht wird.

Aufgabe der vorliegenden Erfindung ist es, ein einfaches Verfahren zur Überwachung von relevanten Abfällen, die beim Rückbau einer strahlenbelasteten Anlage oder Teilen davon anfallen, bereitzustellen.

Diese Aufgabe wird erfinderisch durch ein Verfahren mit den Merkmalen des Anspruchs 1 gelöst. Weitere vorteilhafte Ausgestaltungen des erfindungsgemäßen Verfahrens ergeben sich durch die Merkmale und Verfahrensschritte der auf den Anspruch 1 rückbezogenen Unteransprüche.

Das erfindungsgemäße Verfahren zur Überwachung von relevanten Abfällen, die beim Rückbau einer strahlenbelasteten Anlage oder Teilen davon anfallen, zeichnet sich vorteilhaft dadurch aus, dass die relevanten Abfälle, die durch Demontage oder Zerlegung der Anlage oder Teilen der Anlage entstehen, jeweils mit mindestens einem Daten-Chip, insbesondere einem RFID-Chip, versehen werden, der relevante Informationen zu dem jeweiligen Abfall speichert.

Auf den Daten-Chip kann über eine Kommunikationsschnittstelle, die drahtgebunden und/oder vorteilhaft drahtlos funktioniert, zugegriffen werden. So können Informationen über Kommunikationseinheiten, welche als mobile Handheldgeräte oder als fest installierte oder mobile Kommunikationseinheiten ausgebildet sein können, in den Daten-Chip Speicher geschrieben und/oder aus diesem Speicher abgerufen werden. Vorteilhaft sind diese in der rückzubauenden Anlage, insbesondere am Rückbauort innerhalb der Anlage, an den relevanten Stellen angeordnet. So können die Kommunikationseinheiten z.B. an folgenden Orten positioniert werden:
a. im Bereich von Datenaufnahmestationen oder Messstellen, an denen u.a. Informationen über die von dem jeweiligen Abfall ausgesendete Strahlung und Strahlungsart und/oder deren Intensität, Gewicht des Abfalls gemessen und die Materialart bzw. Materialzusammensetzung bestimmt wird;
b. an verschiedenen Orten entlang des Transportweges des Abfalls vom Entstehungsort bis hin zum Endlager oder der Verwertungsstation des relevanten Abfalls;
c. im Bereich von Konditionierungsstationen, bei denen der relevante Abfall sortiert und evtl. noch einmal zerteilt wird und/oder mit anderen Abfällen zusammen in dafür vorgesehene Behältnisses getan werden;
d. im Bereich von Dekontaminierungsstellen;
e. im Bereich von Zwischenlagern;
f. an Transportmitteln oder Durchgangsschleusen.

Sofern neue Informationen, wie sie weiter unten beispielhaft aufgeführt sind, an den oben beschriebenen beispielhaft angegebenen Orten a) bis f) über den jeweiligen relevanten Abfall vorliegen, z.B. mittels eines Messverfahrens gewonnen Daten, neue Ortsinformationen, etc., so können diese ebenfalls auf dem Daten-Chip abgelegt und/oder an eine Datenbank übermittelt und in dieser gespeichert werden. Selbstverständlich können mit den aktualisierten Informationen alte Informationen im Speicher des Daten-Chips oder der Datenbank überschrieben werden. Es kann jedoch von Vorteil sein, wenn alte auf dem Daten-Chip und/oder in der Datenbank befindliche Informationen nicht überschrieben werden, so dass im Daten-Chip und/oder in der Datenbank auch historische Informationen über den Abfall und seinen Werdegang verbleiben und später abrufbar sind.

Auf dem Daten-Chip und/oder in der Datenbank können erfindungsgemäß alle der nachfolgend aufgeführten Informationen oder lediglich ein Teil der Informationen abgespeichert werden. Dies hängt auch davon ab, ob sich all die nachfolgend beispielhaft aufgelisteten Informationen für den jeweils angefallenen relevanten Abfall bzw. der Aufbewahrungs- oder Transportbehältnissen ermitteln lassen. Folgende Informationen können zusammen, einzeln oder in Kombinationen, je nach gesetzlicher oder behördlicher Vorgabe, auf dem Daten-Chip und/oder in der Datenbank gespeichert werden:
- die vom Abfall oder vom Aufbewahrungs- oder Transportbehältnis ausgesendete Strahlungsart;
- Strahlungsintensität;
- Gewicht des Abfalls;
- Dosisleistung;
- Kontamination;
- Basis-Nuklid-Vektor;
- Abmessungen, Lage des Schwerpunktes, Form- und/oder Geometriedaten des Abfalls;
- Identifikationsnummer des jeweiligen Abfalls;
- Aktueller Ort des jeweiligen Abfalls;
- Zeitangabe(n) der letzten Informationseingaben;
- Material des relevanten Abfalls;
- Daten zur Brennbarkeit des Abfalls;
- Historie des Abfalls, insbesondere Herkunft, zurückgelegte Logistikwege und/oder Aufbewahrungsorte;
- Bearbeitungs- oder Konditionierungsstatus;
- weitere radiologische Werte;
- nächster vorgesehener Bearbeitungs- bzw. Verfahrensschritt
- Zulassungsdaten und Zustand (für Transportbehälter und Aufbewahrungsbehältnisse).

Diese Auflistung von Informationen muss nicht vollständig sein. Es ist selbstverständlich möglich, dass auch andere Informationen in dem Speicher des Daten-Chip und/oder der Datenbank abgespeichert sind bzw. abgespeichert werden können.

Der Daten-Chip kann an dem jeweiligen relevanten Abfall, sobald dieser entstanden ist, angeordnet werden. So kann der Daten-Chip unmittelbar am Abfall oder aber an dessen Aufbewahrungs- oder Transportbehältnis befestigt werden.

Dabei können die ersten Informationen auf dem Daten-Chip gespeichert werden, bevor der Daten-Chip am Abfall oder dessen Behältnis angeordnet bzw. befestigt wird. Es ist aber auch möglich, dass nach dem Entstehen des relevanten Abfalls sofort an diesem oder dem dafür vorgesehenen Behältnis ein Daten-Chip angeordnet bzw. befestigt wird, der dann anschließend über eine Kommunikationseinheit automatisch oder erst nach manueller Auslösung mit den geforderten Informationen beschrieben wird. Ebenso ist es selbstverständlich möglich, dass die Behältnisse bereits einen Daten-Chip aufweisen, so dass die Informationen zum im Behältnis gelagerten Abfall sofort in den Speicher des Daten-Chips abgespeichert werden können. Je nach Anforderung kann der Daten-Chip am Abfall oder dessen Behältnis lösbar oder unlösbar befestigt werden. Beide Varianten haben dabei ihre Vor- und Nachteile. Bei einer lösbaren Befestigung kann der Daten-Chip ungewollt verloren gehen. Bei einer unlösbaren Befestigung kann der Daten-Chip z.B. vor einer Dekontaminierung nicht vom Abfall getrennt werden und wird somit selbst zu Abfall, der entsorgt werden muss. Es ist somit von Vorteil, wenn stets die für den jeweiligen relevanten Abfall oder dessen Behältnis am geeignetste Befestigungsform ausgewählt wird. Es ist jedoch auch möglich, dass nur eine Befestigungsform vorgegeben ist, so dass der Daten-Chip entweder stets lösbar oder stets unlösbar vom Abfall oder dessen Behältnis ist.

Die Daten-Chips können mittels Passwort und/oder geeigneter Verschlüsselungsmethode zugriffsgeschützt sein, so dass nur befugte Personen und/oder Datenverarbeitungseinrichtungen Zugriff auf den jeweiligen Daten-Chip und/oder die in dessen Speicher gespeicherten Daten haben.

Der Daten-Chip weist zumindest einen Speicher sowie eine Kommunikationsschnittstelle auf. Es ist optional zudem möglich, dass der Daten-Chip zudem eine Datenverarbeitungseinheit, insbesondere in Form eines Controllers aufweist, mit dem Programmcode ausführbar ist. Vorteilhaft bezieht der Daten-Chip, wie es bei RFID-Chips üblich ist, seine Energie aus den aufgefangenen Funksignalen. Es ist jedoch ebenso möglich, dass der Daten-Chip selbst oder an ihm angelagert und mit ihm elektrisch verbunden einen Energiespeicher, z.B. in Form einer Batterie, aufweist. Wie bereits beschrieben, kann der Daten-Chip ein RFID-Chip sein. Bevorzugt ist es ein RFID-Chip, welcher auch bei stärkerer Strahlung, die durch die strahlenbelastete Anlage und deren Abfällen hervorgerufen ist, funktioniert.

Vorteilhaft wird der frisch entstandene relevante Abfall zunächst strahlentechnisch vermessen und gewogen, wonach dann die ermittelten Werte bzw. Informationen auf den Daten-Chip sowie in der Datenbank abgelegt bzw. gespeichert werden.

Während des Transports des relevanten Abfalls wird vorteilhaft bei jedem Passieren einer Kommunikationseinheit zumindest die Orts- bzw. Positionsinformation und ggfs. das Datum und die Tageszeit auf dem Daten-Chip und/oder in der Datenbank gespeichert, so dass zumindest in der Datenbank der aktuelle Ort oder zumindest der letzte bekannte Ort des Abfalls bzw. seines Behältnisses gespeichert ist.

Vorteilhaft sind entsprechende Kommunikationseinheiten auch an Schleusen, Türen und Toren angeordnet, so dass auch automatisch Signale generiert werden können, sobald ein relevanter Abfall einen Bereich verlassen hat oder an einem neuen Bereich, wie z.B. einer Messstation, einem Zwischenlager, einer Dekontaminierungsstation oder einer Konditionierungseinrichtung angekommen ist.

Befindet sich ein relevanter Abfall im Bereich einer Kommunikationseinheit, so kann die Kommunikationseinheit automatisch entweder einen Teil oder alle Informationen aus dem Daten-Chip auslesen und diese Informationen z.B. mittels einer Anzeigeeinheit anzeigen.

Auch kann die Kommunikationseinheit eine Verbindung zur Datenbank aufbauen und die dort zu dem relevanten Abfall abgespeicherten Informationen abrufen und z.B. anzeigen oder mit den auf dem Daten-Chip gespeicherten Informationen vergleichen. Sollte die hierfür zuständige Datenverarbeitungseinheit der Kommunikationseinheit oder einer nachgeschalteten Datenverarbeitungseinheit feststellen, dass die in der Datenbank abgespeicherten Informationen nicht mehr auf dem neuesten Stand sind, so können die neuesten Informationen, die entweder aus dem Daten-Chip oder von neu durchgeführten Messungen stammen, in die Datenbank und/oder in den Daten-Chip geschrieben werden.

Verlässt der relevante Abfall den Bereich einer Kommunikationseinheit können automatisch oder durch manuelle Veranlassung alle aktuellen Informationen auf dem Daten-Chip und/oder in der Datenbank abgespeichert bzw. aktualisiert werden.

Wird ein Abfall an einen Ort gebracht, an dem eine Kommunikationseinheit angeordnet ist, an dem der Abfall jedoch nicht sein darf, kann dies über die Kommunikationseinheit automatisch ermittelt und ein entsprechender Alarm ausgelöst werden.

Die Orts- bzw. Positionsinformation und optional auch die Zeit- und Datumsinformation wird während des Transports des relevanten Abfalls oder nach Erreichen eines oder jedes Etappenziels oder Endzielortes im Speicher des Daten-Chips und/oder der Datenbank aktualisiert oder als zusätzlicher Datensatz im jeweiligen Speicher des Daten-Chips oder der Datenbank abgespeichert.

Als aktuelle Ortsinformation kann entweder die Position der Kommunikationseinheit verwendet werden oder aber es wird ein allgemeiner Ort, wie z.B. eine Raumangabe, Lagerfläche, etc. der Kommunikationseinheit zugeordnet, wonach dann diese vorgegebene Ortsinformation im Speicher des Daten-Chips und insbesondere in der Datenbank abgelegt wird.

Es ist jedoch auch möglich, dass eine Kommunikationseinheit ihren Standort mittels eines "Global Positioning System" GPS oder mittels von Netzwerkdaten, z.B. von Telefon- oder Kommunikationsnetzen ermittelt. Hierdurch ist vorteilhaft sichergestellt, dass stets die richtige zugehörige Ortsinformation abgespeichert wird. So kann auch nach dem Verändern der Position einer Kommunikationseinheit diese nach Ermittlung der neuen Positionsinformation die richtige Positionsinformation in dem jeweiligen Speicher hinterlegt werden.

In einer bevorzugten Ausführungsform des erfindungsgemäßen Verfahrens können auf dem Daten-Chip und/oder der Datenbank noch zusätzliche Informationen über den Herkunftsort, die Bezeichnung der Vorrichtung, des Einrichtungsgegenstandes, Rohres, der Leitung, Maschine, des Gebäudeteils, etc., von dem der relevante Abfall abstammt, gespeichert werden.

In der Datenbank kann zu jedem relevanten Abfall und/oder seinem zugehörigen Behältnis eine, insbesondere indizierte, Kennzeichnungsnummer vergeben werden, die mit den oben beschriebenen Informationen verlinkt ist. Es ist selbstverständlich möglich noch weitere Indizierungen der abgelegten Informationen bzw. der Datenbank vorzunehmen, damit in den Datensätzen relevante Informationen, insbesondere mittels Datenfiltern, schnell aufgefunden werden können.

In der Datenbank können auch Informationen über Rückbaupläne der Anlage und deren Teile und/oder Informationen über zur Verfügung stehende Lagerflächen für die Zwischen- und/oder Endlagerung für die relevanten Abfälle gespeichert werden. Hierdurch ist es möglich, frühzeitig Engpässe im Materialfluss und bei Bearbeitungsstellen, Messstellen oder (Zwischen-)Lagerflächen zu erkennen und gegebenenfalls rechtzeitig Abhilfe zu schaffen.

In der Datenbank oder auf dem Daten-Chip können Informationen über den Platzbedarf der relevanten Abfälle und der noch anzufallenden relevanten Abfälle und/oder deren Behältnisse gespeichert sein.

Ferner können in der Datenbank auch Informationen über die bei Messplätzen, Konditionierungseinheiten, sonstigen Arbeitsstationen zur Verfügung stehende Lager- und/oder Arbeitsfläche für die relevanten Abfälle und/oder deren Behältnisse gespeichert sein. Hierdurch kann eine auf die Datenbank zurückgreifende Datenverarbeitungseinheit durch Auswertung der gespeicherten Informationen erkennen, ob genügend Lager- und/oder Arbeitsfläche an dem jeweiligen Ort zur Verfügung steht, um die momentan oder demnächst zu diesem Ort transportierten relevanten Abfälle verarbeiten und/oder lagern zu können. Sofern die Arbeits- oder Lagerfläche nicht ausreichend ist, kann der Materialfluss vorteilhaft gestoppt, umgeleitet oder die Flächen anders als geplant genutzt werden.

Auch können in der Datenbank Informationen über die benötigten Bearbeitungswerkzeuge, Dekontaminierungseinrichtungen, Messinstrumente, Behältnisse, Bearbeitungszeit für die zu entstehenden oder bestehenden relevanten Abfälle und/oder benötigten Fördermaschinen für die jeweiligen relevanten Abfälle und noch zu demontierenden bzw. zu zerlegenden Teile der Anlage und/oder die Konditionierung der entstandenen relevanten Abfälle gespeichert sein. Auch können in der Datenbank Informationen über die benötigten Arbeitskräfte und/oder Zeitaufwand zur Demontage oder Zerlegung der Anlage, deren Teile und/oder der entstandenen relevanten Abfälle gespeichert sein.

Somit ist es vorteilhaft möglich, dass das System anhand der gespeicherten Informationen erkennt, wann und wo die bereitstehende Kapazität an Arbeitskräften, Maschinen, Behältnissen, Messinstrumenten, benötigter Lagerflächen und/oder Transportbehältern nicht ausreicht, so dass die Prozesskette daraufhin abgestimmt bzw. geändert werden kann oder das System für ausreichende Kapazität sorgt.

Zudem kann das System vorteilhaft aufgrund der gespeicherten und/oder aktuellen Daten für jeden Prozessschritt die benötigten Kosten neu berechnen und abspeichern und/oder anhand von bereits entstandenen Kosten die für den jeweiligen Prozessschritt oder für mehrere Prozessschritte abschätzen bzw. berechnen und abspeichern.

Durch die gespeicherten Daten kann die Beladung und Konditionierung von Behältnissen zudem vorteilhaft optimiert werden, z.B. um End- oder Zwischenlagerbedingungen zielgerichtet und mit minimalem Aufwand erfüllen zu können. So kann vorteilhaft auch die Zahl der benötigten Behältnisse möglichst klein gehalten werden.

Auch kann durch die zu den jeweiligen Abfällen und/oder der Aufbewahrungs- und Transportbehältnisse gespeicherten Daten eine Rekontamination von Teilen vorteilhaft vermieden werden.

Ebenso können in der Datenbank Informationen über die bestehenden Rückbaugenehmigungen sowie die in Zukunft noch erforderlichen und damit noch einzuholenden Rückbaugenehmigungen gespeichert sein. So kann eine Datenverarbeitungseinheit basierend auf den in der Datenbank gespeicherten Informationen z.B. die Entscheidungsträger über demnächst einzuholende Rückbaugenehmigungen in Kenntnis setzen, wenn bestimmte vorab eingegebene Rückbauschritte erreicht sind, wodurch vorteilhaft Zeit eingespart wird, da nunmehr rechtzeitig die benötigten Genehmigungen eingeholt werden können, so dass der Rückbau nicht unterbrochen werden muss.

Auch kann die Datenverarbeitungseinheit basierend auf den in der Datenbank gespeicherten Informationen die für den Rückbau und Transport sowie die Weiterverarbeitung der Anlagenteile und relevanten Abfälle berechnen, wann, wo und in welchen Mengen erforderlichen Arbeitskräfte, Maschinen, Behältnisse, Messinstrumente, Lagerflächen und/oder Transportbehälter benötigt werden und diese entsprechend einteilen. In einer vorteilhaften Weiterbildung erkennt die Datenverarbeitungseinheit, wann und wo die bereitstehende Kapazität an Arbeitskräften, Maschinen, Behältnissen, Messinstrumenten, benötigten Lagerflächen und/oder Transportbehältern nicht ausreicht und entweder für ausreichende Kapazität sorgt oder aber die geplante Prozesskette abändert.

Mittels der in der Datenbank gespeicherten Informationen können vorteilhaft mit dem erfindungsgemäßen Verfahren die Kosten für einzelne Rückbauschritte und/oder für Rückbauabschnitte, welche jeweils mehrere Rückbauschritte umfassen, berechnet oder abgeschätzt werden, wodurch sich bessere Kalkulationsmöglichkeiten und eine bessere Ausnutzung der zur Verfügung stehenden maschinellen und Arbeitskräfteressourcen erzielen lässt.

Ebenso lassen sich aus den auf den Daten-Chips und/oder in der Datenbank gespeicherten Informationen für zukünftige Prozessschritte insbesondere die Kosten und die benötigte Zeit ermitteln oder abschätzen.

Sofern der relevante Abfall oder der mit dem relevanten Abfall gefüllte Behälter oder das mit dem relevanten Abfall befüllte Behältnis eine Kommunikationseinheit oder eine Sicherheitseinrichtung erreicht, passiert oder verlässt, kann überprüft werden, ob der oder die notwendigen Daten-Chips am Abfall oder dem Behälter bzw. Behältnis noch angeordnet sind. Dies kann automatisch ablaufen, indem z.B. mittels Videoüberwachung erkannt wird, ob der Abfall oder der Behälter bzw. das Behältnis sich im Bereich der Kommunikationseinheit oder der Sicherheitseinrichtung befindet. Es ist jedoch auch möglich, dass die Überprüfung manuell vom Bedienungspersonal ausgelöst wird. Sollte sich herausstellen, dass kein Daten-Chip oder nicht die notwendige Anzahl von Daten-Chips oder tatsächlich falsche Daten-Chips vorhanden sind, so kann ein Alarmsignal erzeugt werden, welches das Bedienpersonal auf den Mangel aufmerksam macht und/oder einen Weitertransport unterbindet.

Mit der vorliegenden Erfindung wird gleichsam die Verwendung von RFID-Chips zur Kennzeichnung und/oder Nachverfolgung von strahlenbelasteten Abfällen beim Rückbau einer strahlenbelasteten Anlage beansprucht, was der Kerngedanke des beanspruchten und oben ausführlich beschriebenen Verfahrens ist.

Es versteht sich von selbst, dass die oben beschriebenen Verfahren nicht immer in der beschriebenen Reihenfolge ablaufen müssen.

Nachfolgend wird anhand von Zeichnungen das erfindungsgemäße Verfahren näher erläutert.

Es zeigen:
- Figur 1:: Eine mögliche Prozesskette für den Rückbau einer Vorrichtung;
- Figur 2:: Vergrößerte Darstellung der Prozessschritte a) und b).

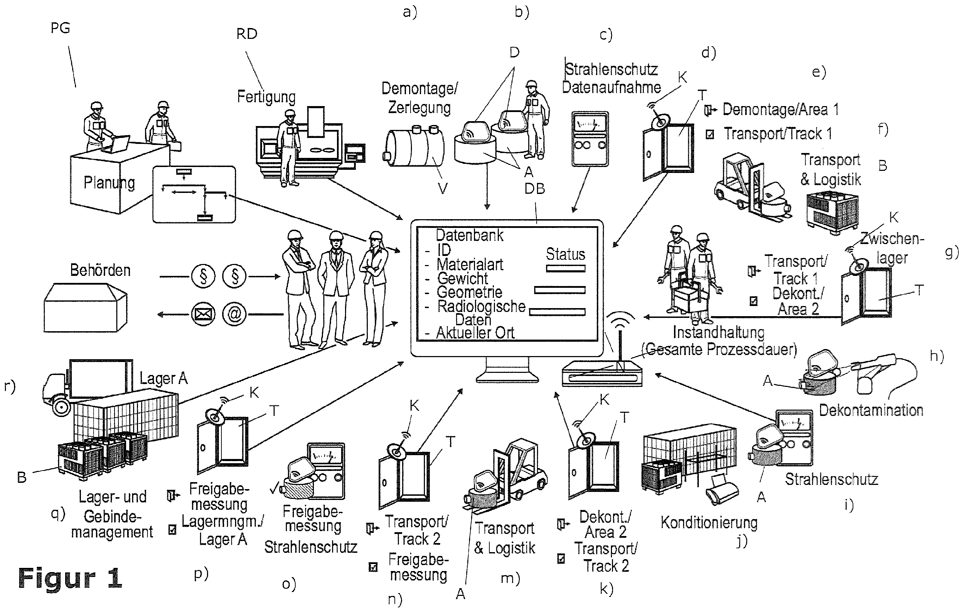

Die Figur 1 zeigt eine mögliche Prozesskette mit den Prozessschritten a) bis r) für den Rückbau, Bearbeitung, Vermessung, Konditionierung und die Einlagerung einer Vorrichtung V einer strahlenbelasteten Anlage. Der Prozesskette ist die Planung PG und die Fertigung RD vorgeschaltet. Es ist von Vorteil, wenn sämtliche Daten zu den einzelnen Prozessschritten in der Datenbank DB abgelegt werden. So muss zu jedem in der strahlenbelasteten Anlage befindlichen und rückzubauendem Bauteil der Rückbau geplant werden. In der Figur ist beispielhaft die Vorrichtung V dargestellt, bei der es sich um einen Behälter handelt, welcher aufgrund seiner Größe zunächst zerlegt werden muss (Prozessschritt a)). Durch die Zerlegung des Behälters V entstehen kleinere Teile, welche im nachfolgenden als relevanter Abfall A bezeichnet werden und die im auf den Prozessschritt a) nachfolgenden Schritt b) mit einem Daten-Chip D, in Form eines RFID-Chips, versehen werden. Da die Behälterteile A starre Körper sind, kann der Daten-Chip D unmittelbar auf den Behälterteilen A angebracht werden. Dies kann durch Kleben, Schweißen, Nieten oder mittels Verschraubungen erfolgen. Nachdem die Daten-Chips D an den einzelnen Abfällen A angebracht sind, erfolgt im Prozessschritt c) eine Strahlenmessung. Zusätzlich können auch das Gewicht, Materialart, und die Geometrie/Abmessungen des jeweiligen Abfalls A bestimmt werden. Bei d) werden zumindest die ermittelten Strahlenwerte oder alle oder einige der vorgenannten Informationen über die Kommunikationseinheit K an den jeweiligen Daten-Chip D und die Datenbank DB übermittelt und dort abgespeichert. Selbstverständlich erhält jeder Daten-Chip eine eigene Identifikationsnummer ID, damit eine eindeutige Zuordnung gegeben ist.

Mit T ist ein Tür bezeichnet, welche sinnbildlich dafür steht, dass an dieser Stelle der Abfall A einen Bereich verlässt oder in einen neuen Bereich eintritt. Ein Bereich kann dabei eine Messstation, Lagerbereich, Bearbeitungsbereich, wie z.B. eine Dekontaminationsanlage oder ein Konditionierungsbereich, sein. An der Tür T kann, wie es in Figur 1 beispielhaft dargestellt ist, jeweils eine Kommunikationseinheit K angeordnet sein, mittels derer die auf dem Daten-Chip D und/oder der Datenbank DB gespeicherten Informationen ausgelesen, überprüft und/oder aktualisiert werden.

Nach dem Verlassen der ersten Datenaufnahme bei c) wird der Abfall A mittels eines Transportmittels TM zu einem Zwischenlager f) transportiert und dort in einen Behälter B geladen, welcher optional ebenfalls mit einem Daten-Chip D versehen werden kann. Beim Verlassen g) des Zwischenlagers f) werden erneut die gespeicherten Informationen überprüft und gegebenenfalls aktualisiert. Zudem kann eine Überprüfung dahingehend stattfinden, ob der Abfall A zu diesem Zeitpunkt und/oder zusammen mit anderen Abfällen tatsächlich das Zwischenlager f) verlassen darf. Auf dem Daten-Chip D oder in der Datenbank DB können zudem Informationen gespeichert sein, welche den Zielort des Abfalls A vorgeben.

Nach dem Zwischenlager f) kann die Strahlung des Abfalls A mittels einer Dekontaminierungseinrichtung h) gesenkt werden. Eine sich anschließende Strahlenmessung und Konditionierung kann dazu führen, dass durch Zerkleinern der bis dahin existierenden und mit Daten-Chips versehenen Abfälle A neue Abfälle A entstehen, welche ebenfalls mittels Daten-Chips D versehen werden müssen. Auch kann es sein, dass vor der Dekontaminierung Daten-Chips D entfernt werden müssen oder diese während der Dekontaminierung h) zerstört werden. Selbstverständlich müssen auch diese Daten-Chips D, sofern notwendig, ersetzt werden.

Zum Abschluss der Dekontamination h), der Strahlenmessung i und der Konditionierung j) werden die bis dahin ermittelten Werte, etc. bei k) die auf den Daten-Chips D und /oder in der Datenbank DB gespeichert Informationen überprüft und gegebenenfalls aktualisiert.

Bevor der Abfall A in das Lager r) abtransportiert und evtl. dort eingelagert wird, erfolgt noch eine Strahlenmessung bei o), die eine Freigabemessung darstellt. Sollte der Abfall A die geforderten Strahlwerte einhalten, so werden die ermittelten Werte bei p) in dem Daten-Chip D und in der Datenbank DB abgelegt. Vor dem Transport in das Lager bei r) können die einzelnen Abfälle A nochmals sortiert und mit anderen Abfällen zu Gebinden gebündelt werden.

Selbstverständlich ist es auch möglich, dass die einzelnen Arbeitsstationen c), e), h), i), j) und o) jeweils über eigene Kommunikationseinheiten K verfügen, mittels derer die Informationen in und aus den Daten-Chips und/oder der Datenbank DB ein- und auslesbar und auch hinsichtlich ihrer Konformität und Kausalität überprüfbar sind.

An den Türen T können selbstverständlich noch signalgebende Mittel, wie z.B. Blinklichter oder Sirenen angeordnet werden, welche Alarmsignale geben können, sobald ein Abfall A unbefugt den jeweiligen Bereich verlässt.

Die in der Datenbank DB enthaltenen Daten stehen zunächst einmal nur den Betreibern der rückzubauenden Anlage zur Verfügung, die z.B. mittels Datenträgern oder über elektronische Kommunikationswege die Daten zuständigen Behörden zur Verfügung stellen. Es ist selbstverständlich auch möglich, dass auch eine den Rückbau überwachende und genehmigende Behörde Zugriffsrechte auf die Datenbank DB erhalten kann.

Es ist vorteilhaft, wenn die Datenbank auch Informationen über Genehmigungen speichert, so dass nachgehalten werden kann, ob für einen Prozessschritt bereits die behördliche Genehmigung vorliegt und die darin vorgeschriebenen Vorschriften eingehalten werden. Hierdurch kann auch frühzeitig erkannt werden, ob und wann für den weiteren Rückbau weitere Genehmigungen beantragt werden müssen.

Auch kann mittels der Datenbank festgestellt werden, ob z.B. eine der Bearbeitungsstationen c), e), h), i), j) und o) keine Kapazität für nachkommende Abfälle mehr hat, so dass mittels dieser Informationen die Prozesse, der Maschinen- und Personaleinsatz sowie die zur Verfügung stehenden Lagerflächen neugeplant und neu zugewiesen werden können. Hierdurch lässt sich ein optimaler Einsatz der zur Verfügung stehenden Arbeitskräfte, Maschinen und Lagerflächen erreichen, wodurch der Rückbau schneller und kostengünstiger erfolgen kann.

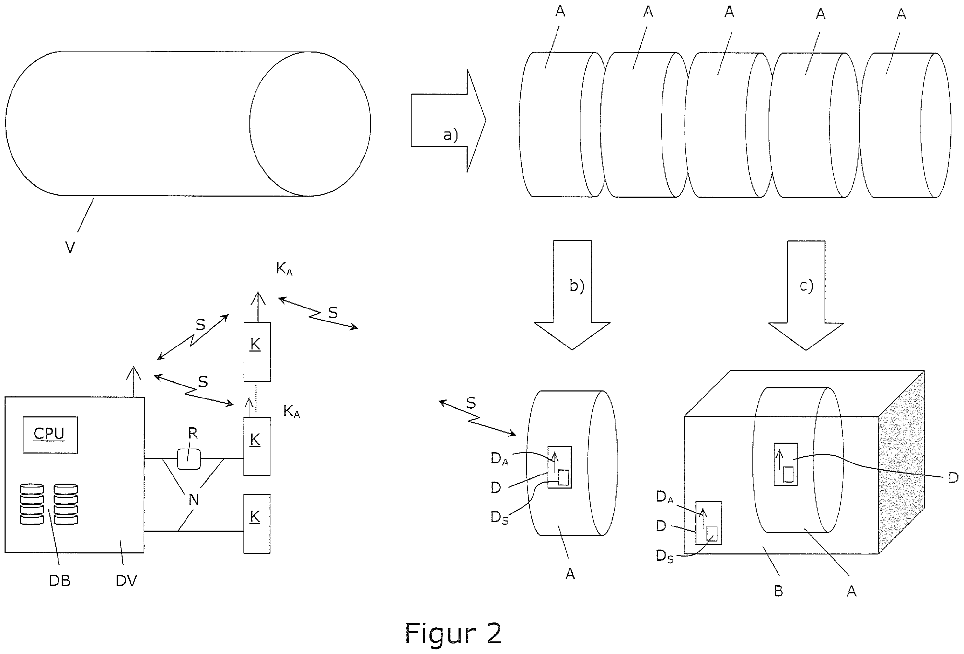

Die Figur 2 zeigt schematisch die Zerlegung a) des strahlenbelasteten Behälters V in einzelne Teile, die ab dort als relevanter Abfall A bezeichnet werden. Der Abfall A kann bei b) mit einem Daten-Chip D versehen werden und anschließend einzeln transportiert werden. Der Daten-Chip D weist einen Speicher D_{S} und eine Antenne D_{A} auf, so dass er mit einer entfernt angeordneten Kommunikationseinheit K über Funksignale S kommunizieren kann. Selbstverständlich kann er auch noch eine Datenverarbeitungseinheit und eine kabelgebundene Kommunikationsschnittstelle aufweisen. So kann der Daten-Chip D wie ein hinlänglich bekannter RFID-Chips ausgebildet sein. Er kann jedoch noch über zusätzliche Komponenten verfügen, die ihn robust für den Einsatz bei strahlenbelasteten Abfällen A machen.

Es ist vorteilhaft, wenn die Kommunikationseinheiten nur über Funksignale mit den Daten-Chips kommunizieren, damit möglichst kein Kontakt zwischen Kommunikationseinheit und Abfall bzw. dessen Behältnis erfolgen muss.

Der Schritt c) zeigt, dass der Abfall A auch direkt nach seiner Entstehung in einen Behälter B eingebracht werden kann, wobei entweder der Daten-Chip D auf dem Abfall, auf dem Behälter B oder auf beiden angeordnet bzw. befestigt wird.

Die Datenbank DB kann entfernt von der rückzubauenden Anlage in einer Datenverarbeitungsanlage bzw. einem Rechenzentrum DV angeordnet sein, wobei die Kommunikation über mindestens eine CPU mit den Kommunikationseinheiten K über ein kabelgebundenes Netzwerk N, R und/oder über Funksignale S erfolgen kann.

## Patentansprüche

1. Verfahren zur Überwachung von relevanten Abfällen, die beim Rückbau einer strahlenbelasteten Anlage oder Teilen davon anfallen und/oder von Aufbewahrungs- oder Transportbehältnissen für solche Abfälle, wobei an einem relevanten Abfall, welcher durch Demontage oder Zerlegung der Anlage oder Teilen der Anlage entsteht, und/oder an einem Aufbewahrungs- oder Transportbehältnis für solchen Abfall jeweils mindestens ein Daten-Chip, insbesondere ein RFID-Chip, angeordnet wird, wobei der Daten-Chip Informationen über den jeweiligen Abfall und/oder das jeweilige Aufbewahrungs- oder Transportbehältnis speichert, und die Informationen die Strahlenbelastung, den momentanen Ort und/oder das Gewicht des Abfalls beinhalten, und dass stationäre und/oder mobile Kommunikationseinheiten zum Ein- und/oder Auslesen der Daten-Chips an verschiedenen Orten der Anlage angeordnet sind, welche mit einer Datenbank kommunizieren, in der zumindest Teile der auf dem Daten-Chip gespeicherten Informationen gespeichert werden, **dadurch gekennzeichnet, dass** in der Datenbank Informationen über die bei Messplätzen, Konditionierungseinheiten oder sonstigen Arbeitsstationen zur Verfügung stehende Lager- und/oder Arbeitsfläche für die relevanten Abfälle und/oder deren Behältnisse gespeichert sind und die auf dem Daten-Chip gespeicherten Informationen von einer Datenverarbeitungseinheit ausgewertet werden, wobei der Materialfluss der relevanten Abfälle gestoppt oder umgeleitet, oder die Lager- und/oder Arbeitsfläche anders als geplant benutzt wird, sofern nicht genügend Lager- und/oder Arbeitsfläche an den Messplätzen, Konditionierungseinheiten oder sonstigen Arbeitsstationen zur Verfügung steht, um die momentan oder demnächst zu diesem Ort zu transportierenden relevanten Abfälle verarbeiten und/oder lagern zu können.

2. Verfahren nach Anspruch 1, **dadurch gekennzeichnet, dass** der Daten-Chip am Abfall oder dessen Aufbewahrungs- oder Transportbehältnis angebracht oder befestigt wird.

3. Verfahren nach Anspruch 1 oder 2, **dadurch gekennzeichnet, dass** der relevante Abfall und/oder das jeweilige Aufbewahrungs- oder Transportbehältnis strahlentechnisch vermessen und gewogen wird und danach die ermittelten Werte auf den Daten-Chip sowie in der Datenbank abgelegt werden.

4. Verfahren nach einem der Ansprüche 1 bis 3, **dadurch gekennzeichnet, dass** die auf dem Daten-Chip und/oder in der Datenbank gespeicherte Orts- bzw. Positionsinformation während des Transports des relevanten Abfalls oder nach Erreichen eines Etappenziels oder Endzielortes aktualisiert wird und/oder beim Verlassen oder Erreichen eines Ortes und/oder beim Transport vorbei an einer Kommunikationseinheit die Positionsinformation der Kommunikationseinheit als aktuelle Orts- bzw. Positionsinformation für den jeweiligen relevanten Abfall in dem Daten-Chip und/oder der Datenbank gespeichert und/oder an die Datenbank zur Speicherung übermittelt wird.

5. Verfahren nach einem der vorhergehenden Ansprüche, **dadurch gekennzeichnet, dass** eine Kommunikationseinheit ihren Standort mittels eines "Global Positioning System" GPS oder mittels von Netzwerkdaten, z.B. von Telefon- oder Kommunikationsnetzen ermittelt und/oder der Standort der Kommunikationseinheit manuell vorgebbar ist und/oder dass an relevanten oder vorgegebenen Orten innerhalb und/oder außerhalb der rückzubauenden Anlage und/oder auf dem Weg bis hin zu einem Endlager oder Verarbeitungsort für die relevanten Abfälle Kommunikationseinheiten angeordnet sind.

6. Verfahren nach einem der vorhergehenden Ansprüche, **dadurch gekennzeichnet, dass** auf dem Daten-Chip und/oder in der Datenbank der Herkunftsort, die Bezeichnung der Vorrichtung, des Einrichtungsgegenstandes, Rohres, Leitung, Maschine, Gebäudeteil, etc. von dem der relevante Abfall abstammt gespeichert ist.

7. Verfahren nach einem der vorhergehenden Ansprüche, **dadurch gekennzeichnet, dass** auf dem Daten-Chip und/oder in der Datenbank die Materialart, Geometrie und/oder die radiologischen Daten gespeichert sind.

8. Verfahren nach einem der vorhergehenden Ansprüche, **dadurch gekennzeichnet, dass** in der Datenbank eine Kennzeichnungsnummer (ID) des Aufbewahrungs- bzw. Transportbehältnis, in dem der jeweilige relevante Abfall angeordnet ist, dem jeweiligen relevanten Abfall zugeordnet ist bzw. wird.

9. Verfahren nach einem der vorhergehenden Ansprüche, **dadurch gekennzeichnet, dass** in der Datenbank Informationen über den Platzbedarf der relevanten Abfälle und der noch anzufallenden relevanten Abfälle und/oder deren Behältnisse gespeichert sind.

10. Verfahren nach einem der vorhergehenden Ansprüche, **dadurch gekennzeichnet, dass** in der Datenbank Informationen über die benötigten Bearbeitungswerkzeuge, Dekontaminierungseinrichtungen, Messinstrumente, Behältnisse, Bearbeitungszeit für die zu entstehenden oder bestehenden relevanten Abfälle und/oder benötigten Fördermaschinen für die jeweiligen relevanten Abfälle und noch zu demontierenden bzw. zu zerlegenden Teile der Anlage und/oder die Konditionierung der entstandenen relevanten Abfälle gespeichert sind.

11. Verfahren nach einem der vorhergehenden Ansprüche, **dadurch gekennzeichnet, dass** in der Datenbank Informationen über die benötigten Arbeitskräfte und/oder Zeitaufwand zur Demontage oder Zerlegung der Anlage, deren Teile und/oder der entstandenen relevanten Abfälle gespeichert sind und/oder in der Datenbank Informationen über die bestehenden Rückbaugenehmigungen und in Zukunft noch erforderlichen und damit noch einzuholenden Rückbaugenehmigungen gespeichert sind, und dass eine Datenverarbeitungseinheit basierend auf den in der Datenbank gespeicherten Informationen die Entscheidungsträger über demnächst einzuholende Rückbaugenehmigungen in Kenntnis setzt, wenn bestimmte vorab eingegebene Rückbauschritte erreicht sind.

12. Verfahren nach einem der vorhergehenden Ansprüche, **dadurch gekennzeichnet, dass** eine Datenverarbeitungseinheit basierend auf den in der Datenbank gespeicherten Informationen die für den Rückbau und Transport sowie Weiterverarbeitung der Anlagenteile und relevanten Abfälle wann, wo und in welchen Mengen erforderlichen Arbeitskräfte, Maschinen, Behältnisse, Messinstrumente, Lagerflächen und/oder Transportbehälter berechnet.

13. Verfahren nach einem der vorhergehenden Ansprüche, **dadurch gekennzeichnet, dass** auf dem Daten-Chip und/oder in der Datenbank die Zeiten gespeichert werden, an denen eine Aktualisierung der Positionsangabe erfolgt ist, wobei insbesondere die Historie der Positions- und/oder Zeitangaben auf dem Daten-Chip und/oder der Datenbank gespeichert wird.

14. Verfahren nach einem der vorhergehenden Ansprüche, **dadurch gekennzeichnet, dass** mittels einer Kommunikationseinheit oder einer Sicherheitseinrichtung überprüft wird, ob an einem relevanten Abfall und/oder Abfallbehälter ein Daten-Chip angeordnet und/oder dieser funktionstüchtig ist.

## Claims

1. Method for monitoring relevant waste occurring in the decommissioning of a radiation-contaminated facility or parts thereof and/or of storage or transport containers for such waste, wherein at least one data chip, in particular a RFID chip, is arranged in each case on a relevant waste that is produced by the dismantling or disassembly of the facility or parts of the facility, and/or on a storage or transport container for such waste, wherein the data chip stores information on the respective waste and/or the respective storage or transport container, and the information includes the radiation dose, the current location and/or the weight of the waste, and that stationary and/or mobile communication units for scanning and/or reading the data chips are arranged at different locations of the facility, which communicate with a database in which are stored at least parts of the information stored on the data chip, **characterised in that** information on the storage area and/or working area for the relevant waste and/or its containers that is available at measurement sites, conditioning units or other work stations is stored in the database and the information stored on the data chip is evaluated by a data processing unit, wherein the material flow of the relevant waste is stopped or diverted, or the storage areas and/or working area is used other than as planned, unless sufficient storage area and/or working area is available at the measurement sites, conditioning units or other work stations to be able to process and/or store the relevant waste to be transported imminently or in the near future to this site.

2. Method according to Claim 1, **characterised in that** the data chip is attached or fixed to the waste or to its storage or transport container.

3. Method according to Claim 1 or 2, **characterised in that** the relevant waste and/or the respective storage or transport container is measured and weighed by radiation technology and the determined values are then stored on the data chip and also in the database.

4. Method according to any one of Claims 1 to 3, **characterised in that** the location or position information stored on the data chip and/or in the database is updated during the transportation of the relevant waste or after reaching a stage target or the final destination, and/or when leaving or reaching a location and/or when transported past a communication unit the position information of the communication unit is stored as the current location or position information for the respective relevant waste in the data chip and/or the database and/or is transmitted to the database for storage.

5. Method according to any one of the preceding claims, **characterised in that** a communication unit determines its location by means of a GPS (Global Positioning System) or by means of network data, for example by telephone or communication networks, and/or the location of the communication unit can be manually preset and/or that communication units are arranged at relevant or predetermined locations within and/or outside the facility to be decommissioned and/or on the way to a final storage or processing site for the relevant waste.

6. Method according to any one of the preceding claims, **characterised in that** the description and name of the device, fixtures, pipework, lines, machinery, building sections, etc. from which the relevant waste originates is stored on the data chip and/or in the database.

7. Method according to any one of the preceding claims, **characterised in that** the type of material, geometry and/or the radiological data are stored on the data chip and/or in the database.

8. Method according to any one of the preceding claims, **characterised in that** an identification number (ID) of the storage or transport container in which the respective relevant waste is arranged is assigned or will be assigned to the respective relevant waste.

9. Method according to any one of the preceding claims, **characterised in that** information about the spatial requirements of the relevant waste and about the still to be expected relevant waste and/or information about their containers is stored in the database.

10. Method according to any one of the preceding claims, **characterised in that** information about the required processing tools, decontamination equipment, measuring instruments, containers, processing times for the future or existing relevant waste and/or required conveying machinery for the respective relevant waste and parts of the facility still to be dismantled and/or decommissioned and/or the conditioning of the resulting relevant waste is stored in the database.

11. Method according to any one of the preceding claims, **characterised in that** information about the required labour and/or time required for the dismantling or decommissioning of the facility, its parts and/or the resulting relevant waste are stored in the database and/or information about the existing decommissioning permits and decommissioning permits that are still required and have to be obtained in the future is stored in the database, and that a data processing unit notifies decision makers on the basis of the information stored in the database about decommissioning permits needed in the near future, when certain previously specified decommissioning steps are achieved.

12. Method according to any one of the preceding claims, **characterised in that** a data processing unit calculates on the basis of the information stored in the database where and in what amounts labour, machinery, containers, measuring instruments, storage areas and/or transport containers are required for the decommissioning and transportation as well as the further processing of the facility parts and relevant waste.

13. Method according to any one of the preceding claims, **characterised in that** the times at which an update of the position information is carried out are stored on the data chip and/or in the database, wherein in particular the history of the position information and/or time information is stored on the data chip and/or the database.

14. Method according to any one of the preceding claims, **characterised in that** it is checked by means of a communication unit or a safety device whether a data chip is arranged on a relevant waste and/or waste container and/or whether this is functional.

## Revendications

1. Procédé de surveillance de déchets pertinents, qui sont produits lors du démantèlement d'une installation exposée aux rayonnements ou de parties de celles-ci et/ou de récipients de conservation ou de transport pour de tels déchets, au moins une puce de données, notamment une puce RFID, étant disposée sur un déchet pertinent, lequel est produit par le démontage ou le désassemblage de l'installation ou de parties de l'installation, et/ou sur un récipient de conservation ou de transport d'un tel déchet, la puce de données enregistrant des informations à propos du déchet respectif et/ou du récipient de conservation ou de transport respectif, et les informations contenant la charge de rayonnement, l'emplacement momentané et/ou le poids du déchet, et des unités de communication fixes et/ou mobiles destinées à charger et/ou à lire les puces de données étant disposées en différents endroits de l'installation, lesquelles communiquent avec une base de données dans laquelle sont enregistrées au moins des parties des informations enregistrées sur la puce de données, **caractérisé en ce que** dans la base de données sont enregistrées des informations à propos des surfaces de stockage et/ou de travail disponibles pour les déchets pertinents et/ou leurs récipients au niveau des postes de mesure, des unités de conditionnement ou d'autres stations de travail et les informations enregistrées sur la puce de données sont interprétées par une unité de traitement de données, le flux de matériel des déchets pertinents étant arrêté ou détourné, ou la surface de stockage et/ou de travail étant utilisée différemment de l'usage prévu, dans la mesure où la surface de stockage et/ou de travail disponible au niveau des postes de mesure, des unités de conditionnement ou d'autres stations de travail est insuffisante pour pouvoir traiter et/ou entreposer les déchets pertinents devant momentanément ou prochainement être transportés vers cet emplacement.

2. Procédé selon la revendication 1, **caractérisé en ce que** la puce de données est apposée ou fixée au déchet ou à son récipient de conservation ou de transport.

3. Procédé selon la revendication 1 ou 2, **caractérisé en ce que** le déchet pertinent et/ou le récipient de conservation ou de transport respectif fait l'objet d'une mesure radiologique et d'un pesage, et les valeurs déterminées sont ensuite stockées sur la puce de données ainsi que dans la base de données.

4. Procédé selon l'une des revendications 1 à 3, **caractérisé en ce que** l'information d'emplacement ou de position enregistrée sur la puce de données et/ou dans la base de données est actualisée pendant le transport du déchet pertinent ou après avoir atteint une destination intermédiaire ou le lieu de destination final et/ou en quittant ou en atteignant un emplacement et/ou lors du transport près d'une unité de communication, l'information de position de l'unité de communication est enregistrée dans la puce de données et/ou la base de données et/ou communiquée à la base de données pour enregistrement en tant qu'information d'emplacement ou de position du déchet pertinent respectif.

5. Procédé selon l'une des revendications précédentes, **caractérisé en ce qu'**une unité de communication détermine sa localisation au moyen du « système mondial de localisation » GPS ou au moyen de données de réseau, par exemple de réseaux de téléphonie ou de communication et/ou la localisation de l'unité de communication peut être prédéfinie manuellement et/ou **en ce que** des unités de communication sont disposées en des emplacements pertinents ou prédéfinis à l'intérieur et/ou à l'extérieur de l'installation à démanteler et/ou sur le trajet jusqu'à un stock final ou un site de traitement pour les déchets pertinents.

6. Procédé selon l'une des revendications précédentes, **caractérisé en ce que** le lieu d'origine, la désignation du système, de l'objet du dispositif, du tube, de la conduite, de la machine, de la partie de bâtiment etc. duquel provient le déchet pertinent sont enregistrés sur la puce de données et/ou dans la base de données.

7. Procédé selon l'une des revendications précédentes, **caractérisé en ce que** le type de matériau, la géométrie et/ou les données radiologiques sont enregistrés sur la puce de données et/ou dans la base de données.

8. Procédé selon l'une des revendications précédentes, **caractérisé en ce qu'**un numéro d'identification (ID) du récipient de conservation ou de transport dans lequel est disposé le déchet pertinent respectif est ou sera associé au déchet pertinent respectif dans la base de données.

9. Procédé selon l'une des revendications précédentes, **caractérisé en ce que** des informations à propos de l'encombrement des déchets pertinents ou des déchets pertinents restant à produire et/ou de leurs récipients sont enregistrées dans la base de données.

10. Procédé selon l'une des revendications précédentes, **caractérisé en ce que** des informations à propos des outils de traitement, dispositifs de décontamination, instruments de mesure, récipients, temps de traitement nécessaires pour les déchets pertinents produits ou existants et/ou les machines de transport requises pour les déchets pertinents respectifs et les parties de l'installation restant à démonter ou à désassembler et/ou le conditionnement des déchets pertinents produits sont enregistrées dans la base de données.

11. Procédé selon l'une des revendications précédentes, **caractérisé en ce que** des informations à propos de la main d'oeuvre et/ou le temps passé nécessaire pour le démontage ou le désassemblage de l'installation, de ses parties et/ou des déchets pertinents produits sont enregistrées dans la base de données et/ou des informations à propos des autorisations de démantèlement existantes et des autorisations de démantèlement encore nécessaires dans l'avenir et devant ainsi encore être obtenues sont enregistrées dans la base de données, et **en ce qu'**une unité de traitement de données, en se basant sur les informations enregistrées dans la base de données, informe le décideur compétent à propos des prochaines autorisations à obtenir lorsque certaines étapes de démantèlement préalablement saisies sont atteintes.

12. Procédé selon l'une des revendications précédentes, **caractérisé en ce qu'**une unité de traitement de données, en se basant sur les informations enregistrées dans la base de données, calcule le moment, l'endroit et la quantité de la main d'oeuvre, des machines, des récipients, des instruments de mesure, des surfaces de stockage et/ou des contenants de transport nécessaires pour le démantèlement et le transport ainsi que pour le traitement postérieur des parties de l'installation et des déchets pertinents.

13. Procédé selon l'une des revendications précédentes, **caractérisé en ce que** sur la puce de données et/ou dans la base de données sont enregistrés les moments auxquels a eu lieu une actualisation de l'indication de position, l'historique des indications de position et/ou de temps étant notamment enregistré sur la puce de données et/ou dans la base de données.

14. Procédé selon l'une des revendications précédentes, **caractérisé en ce qu'**un contrôle est effectué au moyen d'une unité de communication ou d'un dispositif de sécurité afin de vérifier si une puce de données est disposée sur un déchet pertinent et/ou un contenant de déchet et/ou si celle-ci est fonctionnelle.
